# FASCICULE DE BREVET EUROPEEN

(11) **EP 2 146 395 B1**
(45) Date de publication et mention de la délivrance du brevet: **18.12.2013**
(21) Numéro de dépôt: 09172565.5
(22) Date de dépôt: 22.03.2007
(51) Int. Cl.: H01R 4/68, H01R 4/62

(54) **Manchon de connexion d'un câble supraconducteur et terminaison de connexion au moyen de ce manchon**
Anschlussmuffe eines Supraleiterkabels und Abschluss des Anschlusses mit Hilfe dieser Muffe
Sleeve for connecting a superconductor cable and connection termination via this sleeve

(30) Priorité: 31.03.2006 FR 0651144
(43) Date de publication de la demande: 20.01.2010
(62) Demande divisionnaire de: 07300894.8
(73) Titulaire: Nexans, 75008 Paris (FR)
(72) Inventeur: Lallouet, Nicolas, 62132, Fiennes (FR); Delplace, Sébastien, 59279, Loon-Plage (FR)
(74) Mandataire: Lenne, Laurence

(56) Documents cités:
- EP-A- 1 489 693
- EP-A- 1 519 446
- EP-A- 1 560 293
- DE-A1- 4 301 944
- DE-C- 736 510
- FR-A- 880 975
- GB-A- 765 754
- US-A1- 2003 040 439

## Description

La présente invention concerne un manchon de connexion d'un câble supraconducteur et terminaison de connexion au moyen de ce manchon. L'invention s'applique tout particulièrement à la haute tension.

Un câble supraconducteur se compose essentiellement d'un support central, généralement de forme cylindrique, autour duquel est enroulé un matériau supraconducteur et une gaine isolante placée autour du supraconducteur. Le support central est constitué d'un matériau électriquement conducteur, mais non supraconducteur. Ce peut être par exemple un câble ou un tube en cuivre. Le matériau supraconducteur peut être sous la forme d'un ruban enroulé autour du support central en une ou plusieurs couches. Du fait de la résistivité quasiment nulle du matériau supraconducteur, le diamètre extérieur du support central est relativement petit. Cependant, la résistivité d'un câble non supraconducteur est beaucoup plus élevée (ci-après appelé câble résistif, bien que la résistivité peut être très faible, comme celle du cuivre par exemple). Il en résulte que pour transporter un courant électrique d'intensité déterminée, il est nécessaire d'utiliser une section de câble beaucoup plus grande pour un câble résistif que pour un câble supraconducteur. Il est donc nécessaire de disposer d'une connexion particulière pour relier un câble résistif à un câble supraconducteur.

La connexion ne doit pas endommager le câble supraconducteur afin de lui conserver ses caractéristiques. Elle doit aussi assurer une bonne continuité du transport du courant électrique. Il est également préférable que la connexion puisse être démontée et/ou remontée aisément, sans avoir à couper une portion de câble, par exemple si le câble résistif ou supraconducteur doit être remplacé. De plus, sachant qu'en cas de court-circuit, le câble supraconducteur perd ses propriétés de supraconductivité et que dans ce cas le courant passe par le conducteur central, lequel est résistif, la connexion doit être conçue en tenant compte de l'éventualité d'un tel incident de fonctionnement.

Le document DE-A-4301944 divulgue un manchon de connexion d'un câble supraconducteur selon le préambule de la revendication 1.

La présente invention propose, selon la revendication 1, une solution au problème de connexion d'un câble supraconducteur, répondant aux exigences énoncées ci-dessus, grâce à un manchon de connexion spécifique.

De façon plus précise, l'invention concerne un manchon métallique destiné à la connexion d'une extrémité de câble supraconducteur, comprenant une partie en forme sensiblement d'un cylindre creux, ladite partie comportant un orifice d'introduction d'un matériau de soudure dans l'espace situé entre une partie dénudée dudit câble supraconducteur sur laquelle le manchon est destiné à être emboîté et la paroi interne de ladite partie du manchon.

Grâce à cette caractéristique, un matériau de soudure qui a, de préférence, un point de fusion relativement bas, inférieur à 100 °Celsius, tel que par exemple un alliage de Sn-Bi-Pb, peut être introduit entre la partie dénudée du câble supraconducteur sur laquelle le manchon est destiné à être emboîté et la paroi interne de la partie du manchon

Selon l'invention, ladite partie du manchon comporte des moyens de contact électrique sur sa surface extérieure.

Lesdits moyens de contact électriques sont constitués par des gorges de forme annulaire destinées à accueillir des lamelles métalliques de contact.

Ledit orifice a une forme oblongue d'axe longitudinal parallèle à l'axe longitudinal du manchon.

Le manchon est réalisé de préférence en cuivre et peut être plaqué d'argent.

L'invention concerne également une terminaison de connexion d'une extrémité d'un câble supraconducteur à un conducteur électrique classique non supraconducteur, ladite extrémité étant composée d'au moins un support central conducteur résistif de forme sensiblement cylindrique, d'un supraconducteur disposé autour du support et d'une gaine isolante entourant le supraconducteur, cette extrémité du câble étant dénudée pour rendre apparent le supraconducteur, au moyen d'un manchon selon l'une des revendications précédentes, et une longueur de ce supraconducteur dénudé étant supprimée pour laisser apparent le support central, terminaison comprenant un manchon métallique composé de deux parties successives adjacentes aboutées, une première partie étant emboîtée autour de la partie apparente du support central et ladite partie, dite deuxième partie, étant soudée autour de la partie apparente du supraconducteur.

Le matériau de soudure a de préférence un point de fusion relativement bas, inférieur à 100 °Celsius, tel que par exemple un alliage de Sn-Bi-Pb.

Selon un autre mode de réalisation, la première partie du manchon comporte un premier et un deuxième élément de forme sensiblement cylindrique, le diamètre du deuxième élément étant supérieur au diamètre du premier élément, et une partie intermédiaire de forme tronconique située entre le premier et le deuxième élément, le diamètre de la grande base de la partie tronconique étant sensiblement égal au diamètre du deuxième élément et le diamètre de la petite base de la partie tronconique étant sensiblement égal au diamètre du premier élément, lequel est emboîté autour de la partie dénudée du support central.

De préférence, le supraconducteur est constitué par au moins une couche d'un ruban supraconducteur enroulé autour du support central.

D'autres avantages et caractéristiques de l'invention apparaîtront au cours de la description qui suit de plusieurs modes de réalisation de l'invention, donnés à titre d'exemples non limitatifs, en référence aux dessins annexés et sur lesquels :
- les figures 1, 2 et 3 illustrent un premier mode de réalisation de l'invention, et
- la figure 4 illustre un deuxième mode de réalisation.

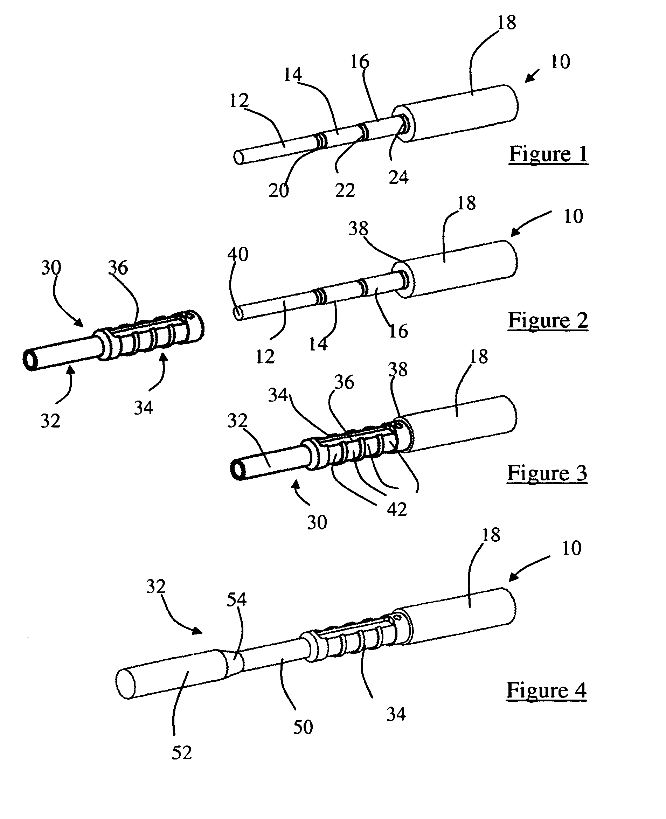

L'extrémité 10 du câble représenté schématiquement sur la figure 1 est constituée d'un support central 12 électriquement conducteur et de forme sensiblement cylindrique. Ce support peut être par exemple un câble de fils de cuivre ou un tube métallique à faible résistivité, en cuivre ou en cuivre argenté par exemple. Deux couches superposées 14 et 16 d'un matériau supraconducteur entourent le support central 12. Une gaine électriquement isolante 18 entoure la couche supraconductrice 16.

Des couches intermédiaires 20, 22 et 24 sont intercalées respectivement entre le support 12 et la couche 14, entre les deux supraconducteurs 14 et 16 et entre le supraconducteur 16 et la gaine 18. La présence de ces couches intermédiaires est avantageuse mais n'est cependant pas obligatoire. Elles peuvent être réalisées par exemple en noir de carbone ou à l'aide de rubans en acier inoxydable enroulés autour du support central 12 et des supraconducteurs 14 et 16.

Les couches supraconductrices 14 et 16 peuvent être formées par des rubans ou des fils en matériau supraconducteur enroulés respectivement autour des couches intermédiaires 20 et 22. De façon générale, le câble ne pourrait comporter qu'un seul supraconducteur 14 ou 16. Les fils ou rubans supraconducteurs peuvent être par exemple du type BSCCO (Bi₂Sr₂Ca₂Cu₃Oₓ) ou du type YBaCuO.

L'extrémité 10 du câble est dénudée en marches d'escaliers de façon à faire apparaître successivement, en partant du câble et sur une longueur qui peut être variable, la couche supraconductrice 16, la couche supraconductrice 14 puis le support central 12. Les couches intermédiaires 20, 22 et 24 ne sont pratiquement pas laissées apparentes, comme représentées sur la figure 1.

Un manchon métallique 30 (figures 2 et 3) vient coiffer la partie centrale 12 dénudée et les couches supraconductrices 14 et 16 dénudées. Ce manchon comporte une première et une deuxième parties 32 et 34 aboutées. La première partie 32 a la forme d'un cylindre creux dont le diamètre interne est très légèrement supérieur au diamètre du support 12 de sorte que cette première partie 32 du manchon peut être fixée sur la partie apparente du support 10 par simple emboîtement ou sertissage. Le manchon peut par exemple être réalisée en cuivre et, lorsque le support central est également en cuivre, on obtient ainsi une bonne liaison électrique cuivre sur cuivre. Le cuivre peut également être plaqué en argent. La deuxième partie 34 du manchon a sensiblement la forme d'un cylindre creux de longueur au moins égale à la longueur des parties dénudées apparentes des couches supraconductrices 14 et 16 de façon à les recouvrir complètement. Le diamètre interne de la deuxième partie 34 du manchon est supérieur au diamètre de la couches supraconductrice 16 (laquelle a un diamètre supérieur à celui de la couche conductrice 14) de sorte qu'un espace est ménagé entre la paroi interne de la deuxième partie 34 du manchon et les supraconducteurs 14 et 16. Un orifice 36 est percé dans la deuxième partie 34, de dimensions suffisantes pour permettre de verser par cet orifice 36 une poudre d'un matériau de soudure, ou de couler directement un alliage de soudure fondu, qui va se localiser entre la paroi interne de la deuxième partie 34 du manchon et les supraconducteurs 14 et 16. L'orifice peut par exemple avoir une forme oblongue telle que représentée sur les figures 2 à 4.

Le matériau de soudage remplit au moins partiellement l'espace entre la deuxième partie 34 du manchon et les supraconducteurs 14 et 16. Ce matériau est électriquement conducteur et possède avantageusement un point de fusion relativement bas, par exemple inférieur à environ 100°Celsius. Ce peut être par exemple un alliage de composition Sn-Bi-Pb. On évite ainsi d'endommager les supraconducteurs par un chauffage à température trop élevée, tout en permettant une bonne liaison électrique entre les couches supraconductrices et le manchon 30.

La longueur du manchon est telle qu'il recouvre complètement les parties dénudées 14 et 16 des supraconducteurs et la partie dénudée 12 du support central, depuis l'extrémité 38 de la gaine isolante 18 jusqu'à au moins l'extrémité 40 du support central 12.

Le manchon 30 peut comporter sur la paroi externe de sa deuxième partie 34 des moyens de contact électrique, par exemple sous forme de gorges 42 usinées dans la paroi externe de la deuxième partie 34 du manchon 30. Ces gorges sont destinées à accueillir des lamelles métalliques de contact ayant une forme annulaire.

L'extrémité 10 du câble coiffée du manchon 30 (figure 3) peut être aisément connectée à une extrémité d'un câble classique résistif formée par exemple d'un tube électriquement conducteur qui formerait la partie femelle de la connexion, le manchon 30 représentant la partie mâle.

Selon un autre mode de réalisation représenté sur la figure 4, la première partie 32 du manchon 30 comporte un premier et un deuxième élément 50 et 52, de forme cylindrique, le diamètre du premier élément 50 étant plus petit que le diamètre du deuxième élément 52. Une partie intermédiaire 54, en forme de tronc de cône, relie les deux éléments 50 et 52. La grande base du tronc de cône 54 a le même diamètre que celui du deuxième élément 52 et la petite base du tronc de cône 54 a le même diamètre que celui du premier élément 50, de sorte que l'on passe progressivement de la section du premier élément 50 à la section plus importante du deuxième élément 52. Le premier élément 50 est creux et comme précédemment peut être fixé par emboîtement sur la partie dénudée du support central 12.

La deuxième partie 34 est identique au mode de réalisation des figures 2 et 3. Les moyens de contact électrique sur la paroi externe de la deuxième partie 34 du manchon ne sont pas utiles dans ce mode de réalisation. Comme précédemment, les première et deuxième parties 32 et 34 du manchon sont métalliques, réalisées par exemple en cuivre, plaqué ou non en argent.

Le deuxième élément 52 peut être connecté à l'extrémité d'un câble classique.

La terminaison qui vient d'être décrite présente de nombreux avantages. La connexion par soudage des extrémités des supraconducteurs est aisée et n'endommage pas, par chauffage élevé ou par courbure, les supraconducteurs qui conservent toutes leurs propriétés. L'extrémité du câble peut être connectée ou déconnectée à un câble classique sans difficulté, ce qui est intéressant lorsque la partie résistive ou supraconductrice a besoin d'être remplacée. Il suffit pour défaire la connexion de chauffer la terminaison à une température supérieure à la température de fusion du matériau de soudage, le manchon 30 pouvant alors être enlevé. De plus, l'assemblage du manchon à l'extrémité dénudée du câble supraconducteur est aisé et facilement reproductible. De même, en cas de court-circuit, l'espace du manchon 30 rempli de soudure augmente la section de passage disponible pour le passage du courant électrique.

D'autres modes de réalisation que ceux décrits et représentés peuvent être conçus par l'homme du métier sans sortir du cadre de la présente invention. Par exemple, les modes de réalisation décrits concernent une extrémité de câble ayant deux couches supraconductrices. Bien entendu, le câble pourrait ne comporter qu'une seule couche supraconductrice. De même, la présence de couches intermédiaires telle que 20, 22 et 24 n'est pas indispensable.

## Revendications

1. Manchon métallique (30) destiné à la connexion d'une extrémité de câble supraconducteur (10), comprenant une partie (34), en forme sensiblement de cylindre creux, ladite partie (34) comportant un orifice (36) d'introduction d'un matériau de soudure dans l'espace situé entre une partie dénudée dudit câble supraconducteur sur laquelle le manchon est destiné à être emboîté et la paroi interne de ladite partie du manchon, ladite partie (34) du manchon comporte des moyens de contact électrique (42) sur sa surface extérieure **caractérisé en ce que** ladite partie (34) du manchon est d'une pièce en forme de cylindre creux, lesdits moyens de contact électriques sont constitués par des gorges (42) de forme annulaire destinées à accueillir des lamelles métalliques de contact et ledit orifice (36) a une forme oblongue d'axe longitudinal parallèle à l'axe longitudinal du manchon

2. Manchon selon la revendication 1, **caractérisé en ce qu'**il est réalisé en cuivre.

3. Manchon selon la revendication précédente, **caractérisé en ce qu'**il est plaqué d'argent.

4. Terminaison de connexion d'une extrémité d'un câble supraconducteur (10) à un conducteur électrique classique non supraconducteur, ladite extrémité étant composée d'au moins un support central conducteur résistif (12) de forme sensiblement cylindrique, d'un supraconducteur (14, 16) disposé autour du support et d'une gaine isolante (18) entourant le supraconducteur, cette extrémité du câble étant dénudée pour rendre apparent le supraconducteur (14, 16), au moyen d'un manchon selon l'une des revendications précédentes, **terminaison caractérisée en ce qu**'une longueur de ce supraconducteur dénudé étant supprimée pour laisser apparent le support central, ledit manchon métallique (30) est composé de deux parties successives adjacentes aboutées, une première partie (32) étant fixée par emboîtement autour de la partie apparente du support central et ladite partie (34), dite deuxième partie, étant soudée autour de la partie apparente du supraconducteur.

5. Terminaison selon la revendication 4, **caractérisée en ce que** ledit matériau de soudure a un point de fusion relativement bas, inférieur à 100 °Celsius.

6. Terminaison selon la revendication 5, **caractérisée en ce que** ledit matériau de soudure est un alliage de Sn-Bi-Pb.

7. Terminaison selon l'une des revendications 4 à 6, **caractérisée en ce que** ladite première partie (32) du manchon comporte un premier (50) et un deuxième (52) élément de forme sensiblement cylindrique, le diamètre du deuxième élément (42) étant supérieur au diamètre du premier élément (50), et une partie intermédiaire (54) de forme tronconique située entre le premier et le deuxième élément, le diamètre de la grande base de la partie tronconique (54) étant sensiblement égal au diamètre du deuxième élément (52) et le diamètre de la petite base de la partie tronconique (54) étant sensiblement égal au diamètre du premier élément (50), lequel est emboîté autour de la partie dénudée du support central (12).

8. Terminaison selon l'une des revendications 4 à 7, **caractérisée en ce que** le supraconducteur est constitué par au moins une couche (14, 16) d'un ruban supraconducteur enroulé autour du support central (12).

## Patentansprüche

1. Metallmuffe (30), die zum Anschluss eines Endes eines Supraleiterkabels (10) bestimmt ist, die einen etwa hohlzylinderförmigen Teil (34) umfasst, wobei der Teil (34) eine Einführöffnung (36) eines Schweißmaterials in den Raum, der sich zwischen einem abisolierten Teil des Supraleiterkabels, auf dem die Muffe zu rasten bestimmt ist, und der Innenwand des Muffenteils befindet, aufweist, wobei der Muffenteil (34) elektrische Kontaktmittel (42) auf seiner Außenfläche aufweist, **dadurch gekennzeichnet, dass** der Muffenteil (34) ein hohlzylinderförmiges Teil ist, wobei die elektrischen Kontaktmittel von ringförmigen Hohlkehlen (42) gebildet werden, die dazu bestimmt sind, metallische Kontaktlamellen aufzunehmen, und die Öffnung (36) eine längliche Form mit Längsachse parallel zur Längsachse der Muffe hat.

2. Muffe nach Anspruch 1, **dadurch gekennzeichnet, dass** sie aus Kupfer hergestellt ist.

3. Muffe nach vorangehendem Anspruch, **dadurch gekennzeichnet, dass** sie mit Silber beschichtet ist.

4. Anschlussabschluss eines Endes eines Supraleiterkabels (10) an einen klassischen elektrischen Leiter, der kein Supraleiter ist, wobei das Ende aus mindestens einer etwa zylindrischen resitiven leitenden zentralen Stütze (12), einem Supraleiter (14, 16), der um die Stütze angeordnet ist, und einer Isolierhülle (18), die den Supraleiter umgibt, zusammengesetzt ist, wobei dieses Ende des Kabels abisoliert ist, um den Supraleiter (14, 16) sichtbar zu machen, mit Hilfe einer Muffe nach einem der vorangehenden Ansprüche, wobei der Abschluss **dadurch gekennzeichnet ist, dass** eine Länge dieses abisolierten Supraleiters entfernt ist, um die zentrale Stütze sichtbar zu lassen, wobei die Metallmuffe (30) aus zwei benachbarten aufeinanderfolgenden aneinandergefügten Teilen zusammengesetzt ist, wobei ein erster Teil (32) durch Rasten um den sichtbaren Teil der zentralen Stütze befestigt ist und der als zweiter Teil bezeichnete Teil (34) um den sichtbaren Teil des Supraleiters geschweißt ist.

5. Abschluss nach Anspruch 4, **dadurch gekennzeichnet, dass** der Schweißwerkstoff einen relativ niedrigen Schmelzpunkt unter 100 ° Celsius hat.

6. Abschluss nach Anspruch 5, **dadurch gekennzeichnet, dass** der Schweißwerkstoff eine Sn-Bi-Pb-Legierung ist.

7. Abschluss nach einem der Ansprüche 4 bis 6, **dadurch gekennzeichnet, dass** der erste Teil (32) der Muffe ein erstes (50) und ein zweites (52) etwa zylindrisches Element aufweist, wobei der Durchmesser des zweiten Elements (42) größer ist als der Durchmesser des ersten Elements (50), und ein kegelstumpfförmiges Zwischenteil (54) zwischen dem ersten und dem zweiten Element, wobei der Durchmesser der großen Basis des kegelstumpfförmigen Teils (54) etwa dem Durchmesser des zweiten Elements (52) entspricht und der Durchmesser der kleinen Basis des kegelstumpfförmigen Teils (54) etwa dem Durchmesser des ersten Elements (50) entspricht, das um den abisolierten Teil der zentralen Stütze (12) rastet.

8. Abschluss nach einem der Ansprüche 4 bis 7, **dadurch gekennzeichnet, dass** der Supraleiter von mindestens einer Schicht (14, 16) eines Supraleiterbands gebildet wird, das um die zentrale Stütze (12) gewickelt ist.

## Claims

1. A metal sleeve (30) intended for connecting a superconductor cable end (10), comprising a part (34), with a substantially hollow cylinder shape, said part (34) including an orifice (36) for introducing a weld material into the space situated between a stripped part of said superconducting cable on which the sleeve is intended to be fitted and the inner wall of said part of the sleeve, said part (34) of the sleeve includes electrical contact means (42) on its outer surface, **characterized in that** said part (34) of the sleeve is a hollow cylindrical part, said electrical contact means are formed by annular grooves (42) intended to receive metal contact strips, and said orifice (36) has an oblong shape with a longitudinal axis parallel to the longitudinal axis of the sleeve.

2. The sleeve according to claim 1, **characterized in that** it is made from copper.

3. The sleeve according to the preceding claim, **characterized in that** it is silver-plated.

4. A termination point for connecting one end of a superconducting cable (10) to a non-superconducting traditional electrical conductor, said end being made up of at least one central resistive conducting support (12) with a substantially cylindrical shape, a superconductor (14, 16) positioned around the support and an insulating sheath (18) surrounding the superconductor, said end of the cable being stripped to expose the superconductor (14, 16), using a sleeve according to one of the preceding claims, said termination point being **characterized in that** a length of said stripped superconductor being removed to expose the central support, said metal sleeve (30) is made up of two successive married parts, the first part (32) being fixed by fitting around the exposed part of the central support and said part (34), called second part, being welded around the exposed part of the superconductor.

5. The termination point according to claim 4, **characterized in that** said weld material has a relatively low melting point, below 100°C.

6. The termination point according to claim 5, **characterized in that** said weld material is an alloy of Sn-Bi-Pb.

7. The termination point according to one of claims 4 to 6, **characterized in that** said first part (32) of the sleeve includes a first (50) and second (52) substantially cylindrical element, the diameter of the second element (42) being larger than the diameter of the first element (50), and an intermediate part (54) with a tapered shape situated between the first and second elements, the diameter of the large base of the tapered part (54) being substantially equal to the diameter of the second element (52) and the diameter of the small base of the tapered part (54) being substantially equal to the diameter of the first element (50), which is fitted around the stripped part of the central support (12).

8. The termination point according to one of claims 4 to 7, **characterized in that** the superconductor is formed by at least one layer (14, 16) of a superconducting tape wound around the central support (12).
